(19) Europäisches Patentamt
European Patent Office
Office européen des brevets

(11) **EP 4 446 907 A1**

(12) **EUROPEAN PATENT APPLICATION**
published in accordance with Art. 153(4) EPC

(43) Date of publication:
**16.10.2024 Bulletin 2024/42**

(51) International Patent Classification (IPC):
***G06F 16/9032*** (2019.01)   ***G06Q 10/20*** (2023.01)

(21) Application number: **22904172.8**

(22) Date of filing: **02.12.2022**

(52) Cooperative Patent Classification (CPC):
**G06F 16/9032; G06K 17/00; G06N 3/045;
G06N 3/0464; G06N 3/09; G06Q 10/20;
G06V 10/764; G06V 10/82; G06V 20/60**

(86) International application number:
**PCT/JP2022/044612**

(87) International publication number:
**WO 2023/106243 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2021 CN 202111479184**

(71) Applicant: **Daikin Industries, Ltd.
Osaka-shi, Osaka 530-0001 (JP)**

(72) Inventors:
• **LIAO, Huan
Osaka-shi, Osaka 530-0001 (JP)**
• **PAN, Si
Osaka-shi, Osaka 530-0001 (JP)**
• **JIANG, Lan
Osaka-shi, Osaka 530-0001 (JP)**

(74) Representative: **Conti, Marco
Bugnion S.p.A.
Via di Corticella, 87
40128 Bologna (IT)**

(54) **PART IDENTIFICATION METHOD AND IDENTIFICATION DEVICE**

(57)    The present application provides a part identification method including: acquiring an image including a part; detecting the image based on a detection model to identify a type of the part; and determining part information based on the type of the part identified, and to a part idntification device. According to the present application, an image including a part is detected based on a detection model to identify a type of the part, and part information is determined, so that a time required for checking the part information can be shortened, and appliance maintenance efficiency can be improved.

**EP 4 446 907 A1**

FIG. 1

## Description

## Technical Field

The present application relates to the technical field of information, and in particular to a method and a device for identifying a part.

## Background Art

When an appliance fails, it may be necessary to replace a damaged part within the appliance. For example, an engineer checks the stock of the damaged part based on the technical term of the damaged part, acquires the stocked part, and then replaces the damaged part.

When an engineer performing on-site maintenance of an appliance encounters a rare part or a complicated part, the engineer needs to contact a person concerned. The person concerned provides a model diagram (for example, an assembly perspective view) of the appliance. Then, the engineer checks the name of each part on-site based on the model diagram, checks the name of the damaged part, and then checks the stock, the quantity, and the like of such a part based on information such as the name, the number, and the like of the part.

It should be noted that the foregoing background description is merely provided for convenience of clear and complete description of the technical contents of the present application and for ease of understanding by those skilled in the art. The fact that these technical contents are described in the background section of the present application does not mean that the technical contents described above are regarded as being known to those skilled in the art.

## Summary of Invention

Regarding the same type of appliance that is, for example, an environmental appliance such as an air conditioner, a purifier, or a humidifier, the structure often differs among different models. There are also differences in parts used and the positions at which the same parts are installed. On top of that, the number of parts in and the complexity of the structure of the appliance are ever increasing.

The inventor of the present application has found that, an engineer maintaining an appliance may not know the name of a certain part, and in such a case, he or she needs to go through a procedure of checking a document or inquiring a person concerned to obtain the name of the part, and then checking the stock, which generally takes a very long time and affects the appliance maintenance efficiency.

In order to solve at least the above technical problems or similar technical problems, embodiments of the present application provide a method and a device for identifying a part, in which an image including the part is detected based on a detection model, a type of the part is identiffied, and part information is determined, so that the time required for checking the part information can be shortened, and the appliance maintenance efficiency can be improved.

An aspect of an embodiment of the present application provides a part identification method including:

acquiring an image including a part;
detecting the image based on a detection model and identifying a type of the part;
determining part information based on the type of the part identified.

The determining the part information based on the type of the part identified includes

determining a part in a predetermined region in the image based on the type of the part identified, and determining the part information based on the part determined.

The predetermined region includes a planar region or a spatial region.

Another aspect of the embodiment of the present application provides a part identification device including:

an acquisition unit configured to acquire an image including a part;
an identification unit configured to detect the image based on a detection model and identify a type of the part; and
a determination unit configured to determine part information based on the type of the part identified.

The determining, by the determination unit, the part information based on the type of the part identified includes

determining a part in a predetermined region in the image based on the type of the part identified, and determining the part information based on the part determined.

The predetermined region includes a planar region or a spatial region.

An advantageous effect of the embodiments of the present application lies in shortening of a time required for checking the part information and improvement in appliance maintenance efficiency, through detection of an image containing a part based on a detection model, identification of a type of the part, and determination of part information.

With reference to the following description and drawings, certain embodiments of the present application are disclosed in detail, and the modes in which the principles of the present application can be employed are clearly described. It should be considered that the embodiments of the present application are not limited in scope. Many variations, modifications, and equivalents may be made to the embodiments of the present application within the scope of the appended claims.

Features that are described and/or illustrated with respect to one embodiment may be used in the same mode or in a similar mode in one or more other embodiments and/or in combination with or instead of the features of the other embodiments.

The term "comprises/comprising" when used in this specification is taken to indicate the presence of features, entire members, steps, or members but does not preclude the presence or addition of one or more other features, entire members, steps, and members.

## Brief Description of Drawings

Elements and features described in one drawing of embodiments of the present application or one embodiment may be combined with elements and features described in one or more other drawings or embodiments. Moreover, in the drawings, like reference numerals designate corresponding members in some drawings, and may be used to designate corresponding members used in one or more embodiments.

The accompanying drawings, which are included to provide a further understanding of the embodiments of the present application and are incorporated in and constitute a part of this specification, illustrate embodiments of the present application and together with the text description serve to explain the principles of the present application. Apparently, the following diagrams only illustrate some embodiments of the present application, and by those skilled in the art, other drawings may also be obtained based on these accompanying drawings without creative efforts. The drawings are as follows.

[Fig. 1] Fig. 1 is a schematic view illustrating a part identification method according to a first embodiment of the present application.
[Fig. 2] Fig. 2 is a schematic view illustrating a method of training a detection model.
[Fig. 3] Fig. 3 is a schematic view illustrating a method of determining a part within a predetermined region in an image.
[Fig. 4] Fig. 4 is a schematic view illustrating a part position within a first predetermined radius range.
[Fig. 5] Fig. 5 is a schematic view illustrating a part within a first predetermined radius range.
[Fig. 6] Fig. 6 is another schematic view illustrating the method of determining a part within a predetermined region in an image.
[Fig. 7] Fig. 7 is a schematic view illustrating a part position within a projection range of a second predetermined region.
[Fig. 8] Fig. 8 is a schematic view illustrating a recommendation of part information to an engineer.
[Fig. 9] Fig. 9 is a schematic view illustrating a method of implementing operation 104.
[Fig. 10] Fig. 10 is a schematic view illustrating extraction of a part feature in operation 901.
[Fig. 11] Fig. 11 is a schematic view illustrating extraction of a user feature in operation 901.
[Fig. 12] Fig. 12 is a schematic view illustrating a method of determining a failed part based on operational data.
[Fig. 13] Fig. 13 is a schematic view illustrating a vibration signal obtained when a part is operating normally and a vibration signal when the part is under failure.
[Fig. 14] Fig. 14 is a schematic view illustrating a part dentification device according to a second embodiment.

## Description of Embodiments

The above and other features of the present application will become apparent from the following description with reference to the drawings. The description and drawings specifically disclose certain embodiments of the present application and illustrate some embodiments that may employ the principles of the present application. It should be understood that the present application is not limited to the described embodiments, but on the contrary, the present application covers all corrections, variations, and equivalents within the scope of the appended claims. Various embodiments of the present application will be described below with reference to the drawings. These embodiments are merely illustrative and are not intended to limit the present application.

In the embodiments of the present application, terms such as "first" and "second" are used for distinction between names of different elements, and do not indicate a spatial arrangement or a time sequence of these elements, and these elements should not be limited by these terms. The term "and/or" includes any and all combinations of one or more of the associated listed items. It will be further understood that the terms such as "comprises", "comprising", and "including" when used in this specification, indicate the presence of stated features, elements, devices, or assemblies, but do not preclude the presence or addition of one or more other features, elements, devices, or assemblies.

In the embodiments of the present application, unless otherwise specified in the context, the singular forms "a", "an", "the" and the like include plural forms, and are not limited to the meaning of "one". Thus, the terms should be broadly understood as "one kind" or "one type", and the term "the" should be understood to include both singular and plural forms. Also, unless the context clearly dictates otherwise, the term "based on" should be understood as "based at least in part on" and the term "on the basis of" should be understood as "on the basis of at least in part of".

(First Embodiment)

A first embodiment of the present application provides a part identification method.

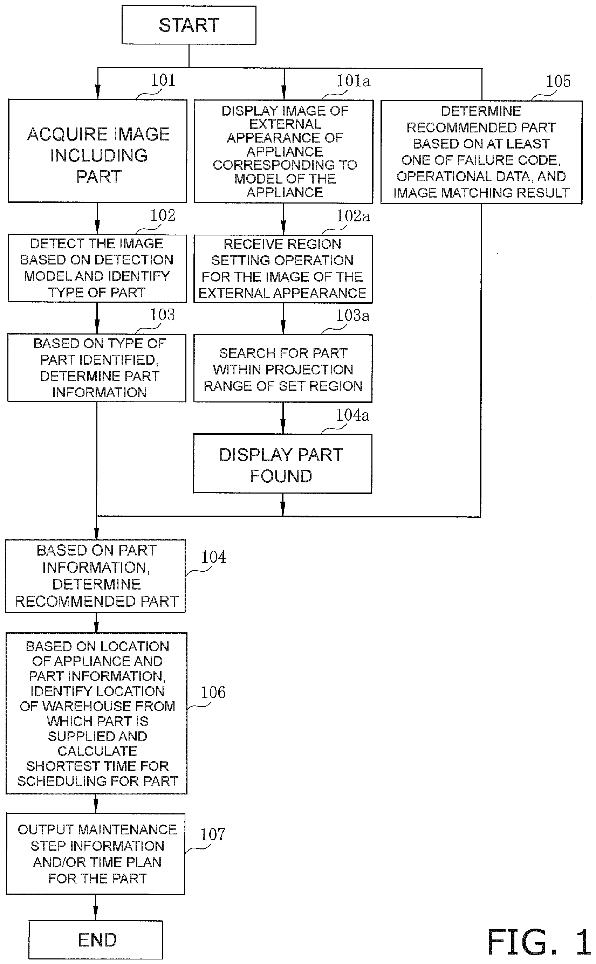

Fig. 1 is a schematic view illustrating the part identification method according to the first embodiment of the present application.
As illustrated in Fig. 1, the part identification method includes:

operation 101 of acquiring an image including a part;
operation 102 of detecting the image based on a detection model and identifying a type of the part; and
operation 103 of determining part information based on the type of the part identified.

The part information may include at least one of a number, a specification, a wire cable number, a supplier, a material, a price, a stock quantity, and an exploded view of the part.
The part may be attached to an appliance, and the appliance may be, for example, an environmental appliance such as an air conditioner, a purifier, or a humidifier. The present application is not limited thereto, and the appliance may be an appliance of a type other than the environmental appliance.
According to the first embodiment, shortening of a time required for checking the part information and improvement in appliance maintenance efficiency as well as improvement in accuracy of identification of the part type can be achieved, through detection of an image including a part based on a detection model, identification of a type of the part, and determination of part information.
In operation 101 of the present embodiment, the image may include only one part, or may include two or more parts, and the two or more parts may be spaced apart from each other or at least partially overlapped in the image. The image may be a photograph captured by an engineer in charge of maintenance of the appliance using, for example, a camera, a mobile terminal such as a smartphone, or an image capturing device such as AR glasses. In addition, the image may be acquired through extraction from a video captured by an image capturing device. For example, when the engineer wants to acquire part information of a certain part, the engineer acquires the image by capturing an image of the part and parts around the part by using an image capturing device.
In operation 101, model information of an appliance including the part may also be acquired. Thus, in operation 102, the image can be detected with reference to the model information. Information such as a name and a number of parts differ among different appliance models. In view of this, through the image detection with reference to the model information, the accuracy of identification of the type of the part can be improved.
The model information may be acquired through scanning of a two dimensional code or a barcode of the appliance, reading of a radio frequency identification (RFID) tag of the appliance, or the like, and is input into the detection model in operation 102. In addition, the engineer can manually input the model information of the appliance. Further, the model information of the appliance may be acquired from the building information model (BIM).
In operation 102, the detection model may be a neural network-based detection model. For example, a detection model based on a convolutional neural network (CNN) +YOU ONLY LOOK ONCE (YOLO) network may be used. The detection model has high stability and high sensitivity to many types of data. In addition, the present embodiment is not limited thereto, and the detection model may also be based on other types of networks such as CNN + another type of network such as, for example, CNN (convolutional neural network) + Faster R-CNN or CNN + SSD network for example.
In operation 102, the detection model may be obtained by training, so that the trained detection model can be directly used to detect the image when the part identification method of the present application is implemented.
A training method for a detection model is described below, where the detection model is a CNN + YOLO network based detection model.

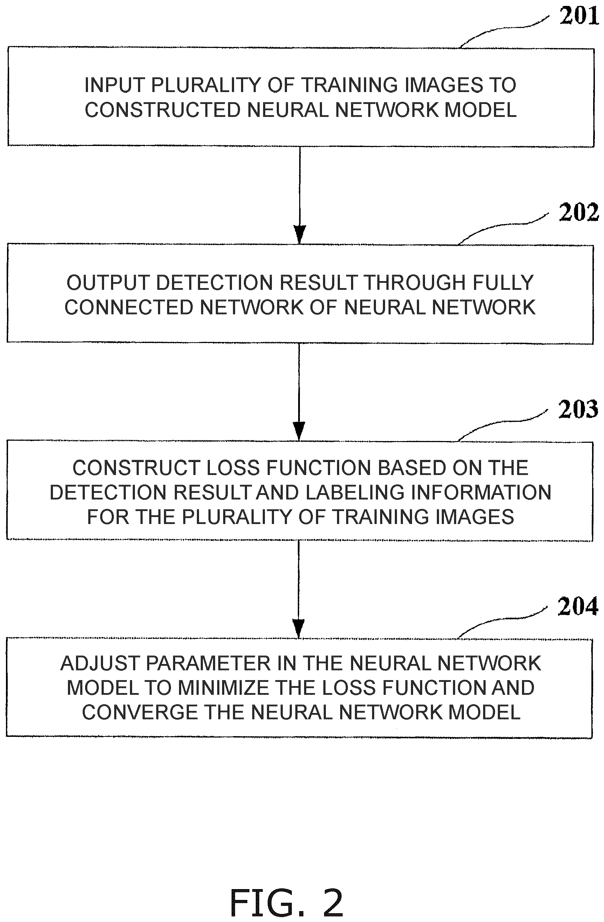

Fig. 2 is a schematic view of a training method for a detection model. As illustrated in Fig. 2, the training method includes:

operation 201 of inputting a plurality of training images into a neural network model constructed;
operation 202 of outputting a detection result via a fully connected network of the neural network;
operation 203 of constructing a loss function based on the detection result and labeling information for the plurality of training images; and
operation 204 of adjusting a parameter in the neural network model to minimize the loss function and converge the neural network model, and setting and saving the adjusted neural network model as the detection model.

In the present embodiment, before the training in Fig. 2 is performed, a plurality of images may be captured for a predetermined range of an appliance of a certain model, and parts in each image may be labeled. For example, the training image is formed by enclosing a part in a bounding box, and labeling the part with a type label. Here, each bounding box includes one part, and the bounding box is the smallest bounding box that encloses a continuous part region of the part. The bounding box has, for example, a rectangular shape. In addition, by capturing a plurality of images for a predetermined range, it is possible to prevent failure to capture the image of some parts due to the imaging angle, and thus it is possible to improve the accuracy of the training.

In operation 201, a plurality of the training images are input into the CNN + YOLO network detection model constructed.

In operation 202, the detection model detects the training image and outputs a detection result from the fully connected network of the neural network. The detection result is, for example, coordinates of a bounding box in the training image and a type of the part in the bounding box.

In operation 203, a loss function is constructed based on the result of the detection in operation 202 and the information labeled for the training image (for example, the coordinates of the bounding box and the type of the part in the bounding box that are labeled for the training image). The loss function may be referred to as YOLOv3LOSS, for example.

The loss function is used to reflect a magnitude of an error between the result of the detection in operation 202 and the labeled information. For example, the loss function Loss may be expressed as in the following Formula (1).

[Math. 1]

$$Loss = \sum_{i=1}^{n} f(y_i, y_i) \quad (1)$$

Where f represents the dissimilarity calculation for two input values (for example, two $y_i$ values, where one $y_i$ indicates the detection result and the other $y_i$ indicates the labeled information), which may be in the form of mean square difference, cross-entropy, or the like.

In operation 204, parameters in the neural network model are adjusted to minimize the loss function and converge the neural network model, and the adjusted neural network model is saved as the detection model. For example, operations 201 to 203 as well as the processing of adjusting the parameters in the neural network model in 204 can be repeated multiple times to minimize the loss function and obtain the final detection model.

The detection model trained based on the method in Fig. 2 may be used in operation 102 to detect the image acquired in operation 101.

For example, in operation 102, for the image acquired in operation 101, the detection model may output the bounding box coordinates of the part in the image and the type of the part within the bounding box. Here, for a single image, the detection model may detect one or more bounding boxes.

Furthermore, for example, in operation 102, the image may first be pre-processed, such as segmented, and for each segmented portion of the image, the bounding box coordinates and the part type corresponding to that portion may be output. The segmentation processing is implemented by classifying the pixel points, and for example, the image may be segmented based on the U-NET method.

In operation 103, based on the result of the identification in operation 102, the part information of which part needs to be output can be determined, and the corresponding part information can be output. For example, the part in the predetermined region in the image is determined based on the type of the part identified, and the part information is determined based on the part determined. Here, the predetermined region may include a planar region (i.e., a two dimensional region) or a spatial region (i.e., a three dimensional region). As a result, it is possible to search for a part within a range corresponding to the predetermined region, and thus it is possible to more accurately output part information necessary for the engineer.

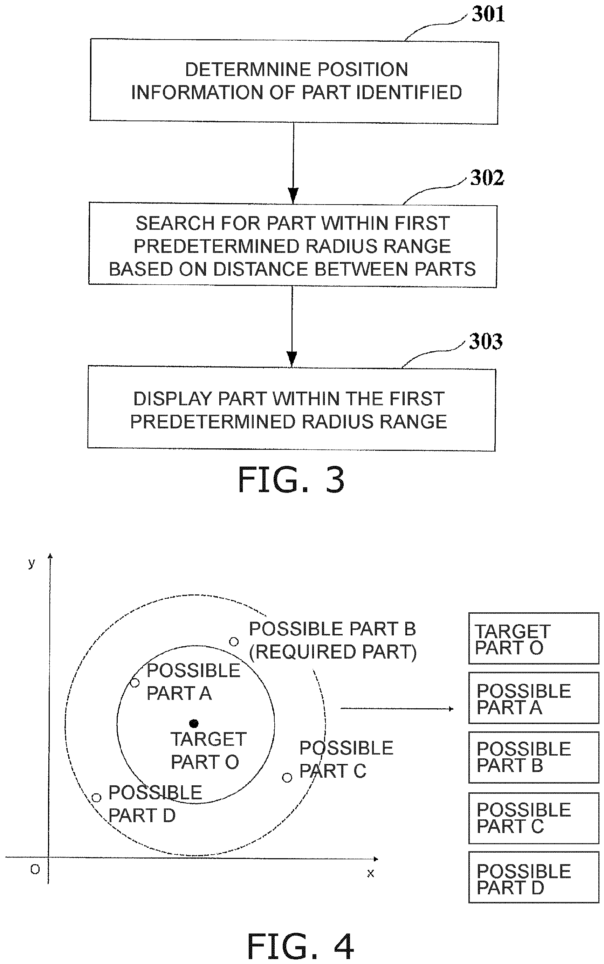

Fig. 3 is a schematic view of a method of determining a part in a predetermined region in an image, corresponding to a case where the predetermined region is a planar region. As illustrated in Fig. 3, the method of determining a part in the predetermined region includes operation 301 of determining position information of the identified part,

operation 302 of searching for a part within a first predetermined radius range based on a distance between parts; and
operation 303 of displaying the part within the first predetermined radius range.

In operation 301, a database corresponding to the part type can be searched for the coordinates of the part identified in operation 102. The coordinates may include center coordinates and/or edge coordinates of the part. The coordinates can be expressed as, for example, (X,Y).

In operation 302, the predetermined region may be a range centered at the coordinates determined in operation 301 and corresponding to the first predetermined radius. The predetermined region may be searched for a part based on a distance between parts. This distance between the parts may be retrieved from a database corresponding to the part type, for example.

In operation 303, the part found in operation 302 may be presented to the engineer. For example, related information of the found part may be displayed on a terminal device such as a mobile phone of the engineer. The related information may include at least one of a number of the part, a name of the part, coordinates of the part, model number specification, a wire cable number, and the like for example.

When the engineer finds the target part from the displayed parts, the engineer can determine the part by performing a selection operation (for example, an operation such as clicking on the screen of the terminal device) for confirmation.

In addition, if the engineer cannot find the target part from the displayed parts, the range of the predetermined region can be expanded by adjusting the numerical value of the first predetermined radius (for example, by an operation such as zooming the screen), so that the part can be searched for in a wider range.

Fig. 4 is a schematic view illustrating a part position within a range of the first predetermined radius. As illustrated in Fig. 4, a target part O corresponds to the part identified by the detection model. When the first predetermined radius is r1, the part found in the predetermined range (indicated by the solid line circle) is a possible part A, and when the first predetermined radius is adjusted to r2, the parts found in the predetermined range (indicated by the broken line circle) are the possible parts A, B, C, and D. Among them, the possible part B is the necessary part (that is, a required part).

In Fig. 4, the plane xy may represent a plane parallel to the image surface.

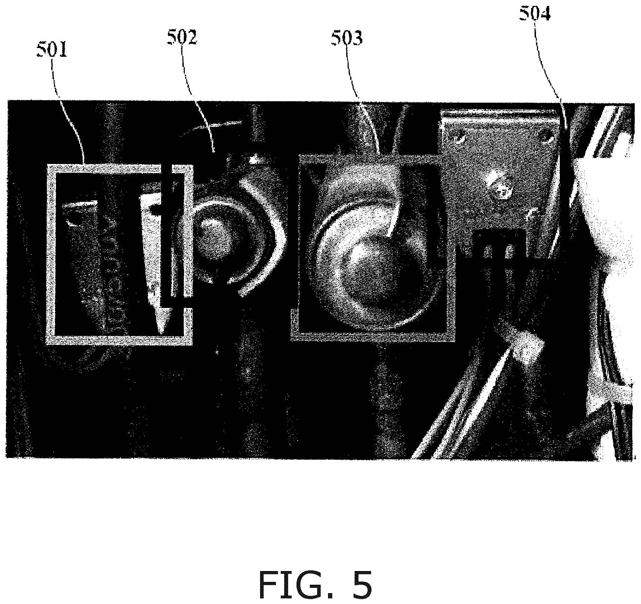

Fig. 5 is a schematic view illustrating parts within the range of the first predetermined radius. As illustrated in Fig. 5, bounding boxes 501, 502, 503, and 504 for the respective parts are displayed in an image 500 acquired in operation 101.

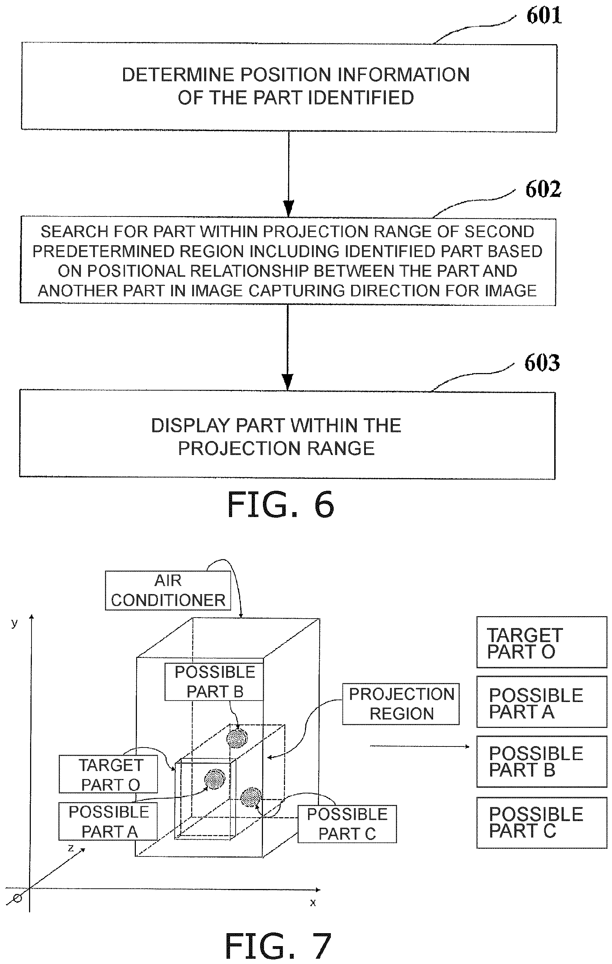

Fig. 6 is another schematic view illustrating the method of determining a part in a predetermined region in an image, corresponding to a case where the predetermined region is a three dimensional spatial region. As illustrated in Fig. 6, the method of determining the part in the predetermined region includes:

> operation 601 of determining position information of the identified part;
> operation 602 of searching for a part within a projection range of a second predetermined region including the identified part based on a positional relationship between the part and another part in an image capturing direction for the image; and
> operation 603 of displaying the part within the projection range.

In operation 601, a database corresponding to the part type may be searched for coordinates of the part identified in operation 102, which may include center coordinates and/or edge coordinates of the part. The coordinates can be expressed as, for example, (X,Y,Z).

In operation 602, the second predetermined region may include a region surrounded by an edge of the identified part. For example, the second predetermined region may be equal to the region surrounded by the edge of the identified part, or the second predetermined region may be greater than the region surrounded by the edge of the identified part.

The range of the second predetermined region in the X direction is, for example, $[X-\triangle x1,X+\triangle x2]$, and the range in the Y direction is, for example, $[Y-\triangle y1,Y+\triangle y2]$. The second predetermined region can be adjusted. For example, at least one of the numerical values $\triangle x1$, $\triangle x2$, $\triangle y1$, and $\triangle y2$ can be adjusted. The range of the projection range of the second region in the Z direction is, for example, $[Z-\triangle z1,Z+\triangle z2]$.

In operation 602, a part is searched for in the predetermined region which is the projection range of the second region, based on a distance between parts. The distance between parts may be retrieved from a database corresponding to the part type, for example.

In operation 603, the part found in operation 602 may be presented to the engineer. For example, related information of the found part may be displayed on a terminal device such as a mobile phone of the engineer. The related information may include at least one of a number of the part, a name of the part, coordinates of the part, model number specification, a wire cable number, and the like for example.

When the engineer finds the target part in the displayed parts, the engineer can determine the part by performing a selection operation (for example, an operation such as clicking on the screen of the terminal device) for confirmation.

In addition, if the engineer does not find the target part in the displayed parts, the search range can be expanded by adjusting the second predetermined region (for example, by an operation such as zooming the screen), so that the part can be searched for in a wider range.

Fig. 7 is a schematic view illustrating a part position within the projection range of the second predetermined region. As illustrated in Fig. 7, the appliance is an air conditioner, and the target part O represents the second predetermined region corresponding to the part identified by the detection model. The second predetermined region is within the projection range in the Z direction, and the found parts are the possible parts A, B, and C.

In Fig. 7, the plane xy may represent a plane parallel to the image surface.

In the present embodiment, the method of identifying a part in the projection range can be used independently from operation 101 and operation 102.

For example, as illustrated in Fig. 1, the part identification method may further include:

> operation 101a of displaying an image of an external appearance of an appliance corresponding to a model of the appliance;
> operation 102a of receiving a region setting operation on the image of the external appearance;
> operation 103a for searching for a part within a projection range of the set region; and
> operation 104a of displaying the part found.

In operation 101a, the database may be searched, and the image of the external appearance of the appliance is determined based on the model of the device. Then, the image of the external appearance is displayed on the terminal of the engineer.

In operation 102a, the engineer may perform the region setting operation on the screen of the terminal, so as to set a region in the external appearance image. The set region is, for example, in the xy plane.

In operation 103a, based on the region set in operation 102a, the part within the projection range of the set region is searched for. For example, the projection range of the set region is determined by increasing the coordinate value in the Z direction (the Z direction is perpendicular to the xy plane) of each point within the set region. Furthermore, based on the data in the database, the part within the projection range is determined.

In operation 104a, the parts found in operation 103a may be displayed in a form of an image, or the parts thus found may be displayed in a form of a list.

In the present embodiment, operations 101a to 104a may be performed in parallel with operations 101 to 103, or may be performed after operation 103.

In the present embodiment, if the type of the part is not identified in operation 102, a model diagram of the appliance including the part may be received and displayed. The model diagram is, for example, an assembly perspective view illustrating the appliance, and the engineer may determine which part information needs to be acquired based on the model diagram.

In the present embodiment, when the part information cannot be determined in operation 103, that is, for example, when the part information cannot be determined based on the identified part, the part cannot be identified, or the like, the part information may be recommended to the engineer for example.

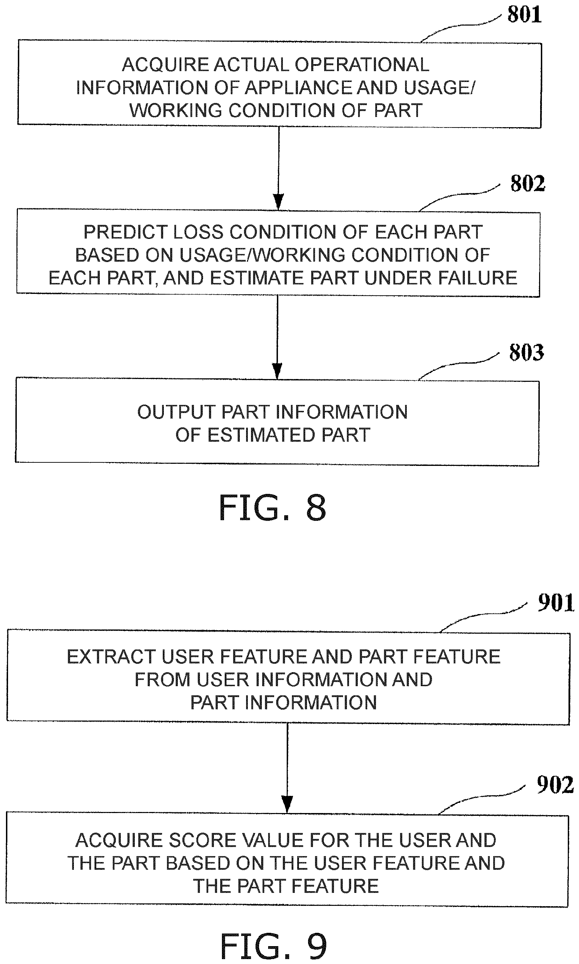

Fig. 8 is a schematic view illustrating the recommendation of the part information to the engineer. As illustrated in Fig. 8, the method of recommending the part information includes:

   operation 801 of acquiring actual operational information of the appliance and usage/working conditions of the parts;
   operation 802 of predicting a loss condition of each part based on the usage/working condition of each part and estimating a failed part; and
   operation 803 of outputting part information of the estimated part, including an appliance maintenance record and/or information for maintaining the estimated part.

Operations 801 to 803 can help the engineer quickly find the required part information and thus improve the maintenance efficiency.

For example, in operations 801 to 803, a recommendation model may be analyzed based on the operational information of the appliance to determine the usage time and the usage/working condition, such as the working time, the working temperature, and/or the working time, of each common part. Then, a push notification of a list of parts in order of the likelihood of failure based on the analysis condition is issued to the engineer on-site for example. The engineer can determine whether the recommended part is a failed part based on the condition on-site. Therefore, the engineer performs the inspection based on the recommended parts, so that the inspection efficiency can be improved, and the cause of the failure can be quickly determined. At the same time, the recommended part that may be under failure is detected and replaced if necessary, thereby improving the maintenance quality and the maintenance efficiency.

The recommendation model may be an artificial intelligence (AI) model. For example, the AI model may be a network model based on supervised learning and the like. The recommendation model may be trained by a method including the following steps of

   inputting a usage time, an operation condition, an operation parameter, and the like of each part to the neural network model;
   outputting a ranking of the loss condition of each part, and recommending parts based on the ranking, by the neural network model; and
   repeating the training until the neural network model converges, and saving the neural network model as the recommended model.

In the present embodiment, when the part information is acquired in operation 103, the recommendation can be performed by further using the recommended algorithm. Thus, the interfering part information can be eliminated and the maintenance accuracy can be improved.

For example, as illustrated in Fig. 1, the part identification method further includes operation 104 of determining a recommended part based on the part information.

Fig. 9 is a schematic view illustrating a method of implementing operation 104. As illustrated in Fig. 9, operation 104 may include

   operation 901 of extracting a user feature and a part feature from user information and the part information; and
   operation 902 of acquiring a score value for the user and the part based on the user feature and the part feature, wherein the score value corresponds to a recommendation level. For example, a higher score value corresponds to a higher recommendation level or vice versa.

Operations 901 and 902 can help the engineer filter the part information that is noise. As a result, the engineer can easily make determinations and can more accurately recognize the failed part.

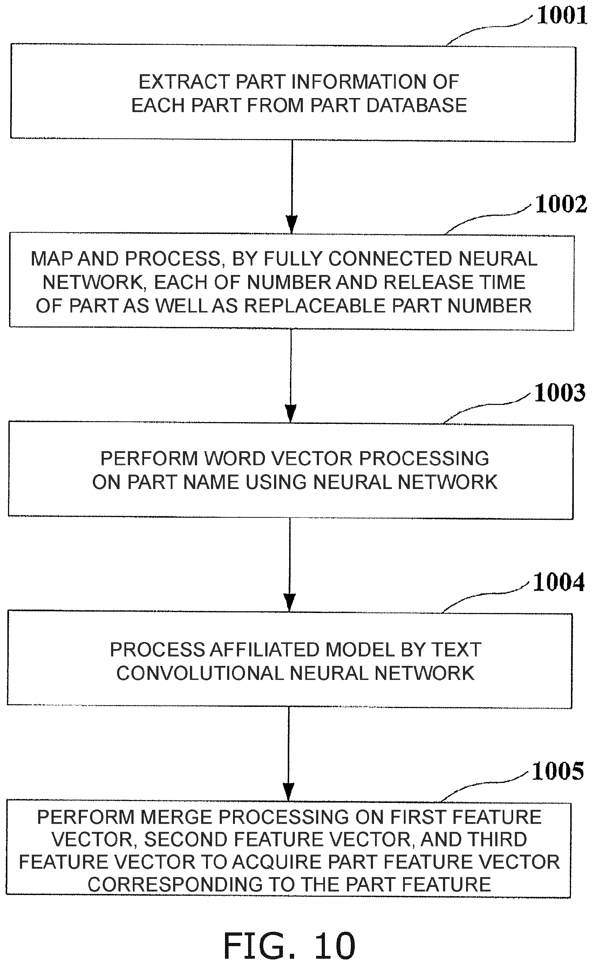

Fig. 10 is a schematic view illustrating extraction of a part feature in operation 901. As illustrated in Fig. 10, a method of extracting a part feature includes:

   operation 1001 of extracting part information of each part from a part database, wherein the extracted part information includes at least one of a part number, a part name, an affiliated model, a release time, a replaceable part number, and the like;

operation 1002 of mapping and processing, by a fully connected neural network, the part number, the release time, and the replaceable part number in the part information, to acquire a first feature vector that is, for example, a 256 dimensional feature vector, for each information of each part;

operation 1003 of using a neural network to perform word vector processing, such as Embedding processing for example, on the part name to acquire a second feature vector that is, for example, a 256 dimensional feature vector for each part;

operation 1004 of processing the affiliated model using a text convolutional neural network to acquire a third feature vector that is, for example, a 256 dimensional feature vector; and

operation 1005 of executing merge processing on the first feature vector, the second feature vector, and the third feature vector to acquire a part feature vector corresponding to the part feature.

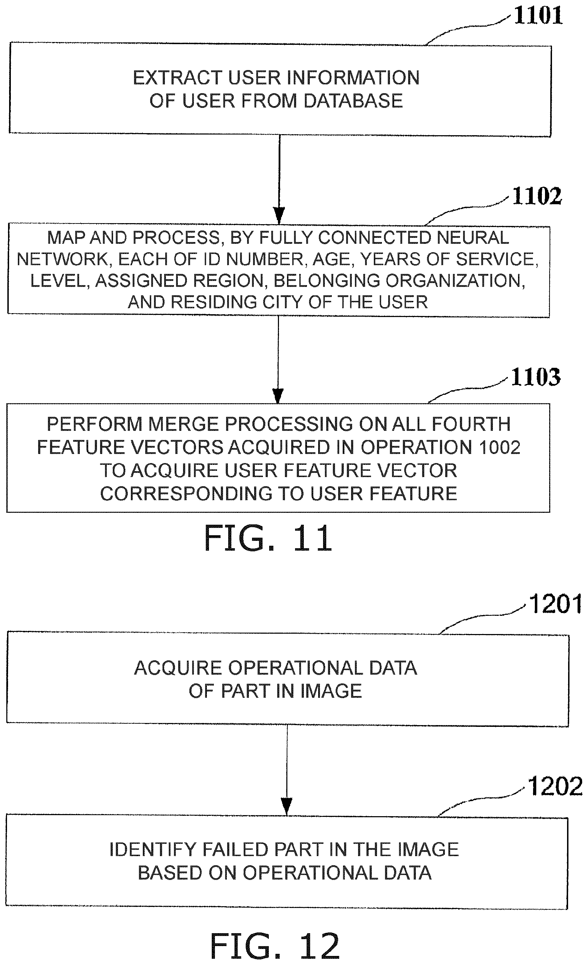

Fig. 11 is a schematic view illustrating extraction of a user feature in operation 901. As illustrated in Fig. 11, a method of extracting a user feature includes:

operation 1101 of extracting user information of a user from a database, the user being, for example, an engineer in charge of maintenance of the appliance, the user information including at least one of types of information such as an identification (ID) number, age, years of service, level, assigned region, belonging organization that is, for example, an office where the engineer works, and residing city;

operation 1102 of mapping and processing, by a fully connected neural network, the ID number, the age, the years of service, the level, the assigned region, the belonging organization, and the residing city of the user, to acquire a fourth feature vector that is, for example, a 256 dimensional feature vector for each of these types of information; and

operation 1103 of executing merging processing on all the fourth feature vectors acquired in operation 1002 to acquire a user feature vector corresponding to the user feature.

In operation 902, the user feature vector and the part feature vector may be input to a fully connected neural network model, and the fully connected neural network model may output a score value for the user and the part. In addition, in operation 803, the use record of the part may be also input to the fully connected neural network, to improve the accuracy of the score value.

If two or more parts are determined in operation 103, the score values corresponding to the respective parts determined in operation 802 may be ranked in descending order based on the recommendation level and presented to the engineer, for example, by displaying the values on the engineer's terminal. If one part is determined in operation 103, the score value corresponding to the one part determined in operation 802 may be presented to the engineer, and the engineer may determine whether to select the part information of the part based on the score value.

As illustrated in Fig. 1, the part identification method according to the first embodiment may further include

operation 105 of determining a recommended part based on at least one of the failure code, the operational data, and the image matching result.

The information of the failure code may include the information of the part failed. Thus, the recommended part can be determined based on the failure code.

The operational data and/or the image matching result can also reflect the information of the part failed. Thus, the failed part can be determined and recommended, based on the operational data and/or the image matching result.

Fig. 12 is a schematic view illustrating a method of determining a failed part based on the operational data. As illustrated in Fig. 12, the method includes:

operation 1201 of acquiring operational data of a part in an image; and
operation 1202 of identifying a failed part in the image based on the operational data.

In the present embodiment, the image in operation 1201 may be the image acquired in operation 101. For example, the image may be a photograph captured by an engineer in charge of maintenance of the appliance using, for example, a camera, a mobile terminal such as a smartphone, or an image capturing device such as AR glasses. In addition, the image may be acquired through extraction from a video captured by an image capturing device. For example, when the engineer wants to acquire part information of a certain part, the engineer acquires the image by capturing an image of the part and parts around the part by using an image capturing device.

In operation 1201, the part in the image may be a part in a specific region of the image. The specific region may be a region selected in the image by a user (for example, an engineer) through a selection operation or the like, or the specific region may be a predetermined region according to Fig. 3 or 6.

In operation 1201, the operational data may include an audio signal generated during operation of the part, a vibration signal generated during operation of the part, and/or the like. For example, the user may place an audio sensor (for example, a microphone) at a position corresponding to the selected region in the image to collect the audio signal generated during operation of the part, or may bring the vibration sensor into contact with the part to acquire the vibration signal generated during operation of the part. The audio sensor or the vibration sensor may be integrated in a mobile terminal such as a mobile phone or a camera. Alternatively, the audio sensor or the vibration sensor may be independent from the mobile terminal and transmit the acquired audio signal or vibration signal to the mobile terminal or the like in a wired or wireless manner.

In operation 1202, the operational data of the part acquired in operation 1201 is compared with operational data during normal operation. Whether a part is under failure is determined based on a result of the comparison. Here, the failure may be determined based on information such as amplitude and/or frequency of a waveform of the operational data. For example, the part is determined to be under failure when a difference between the amplitude of the waveform of the operational data and the amplitude of the waveform of the operational data during normal operation exceeds a first threshold, and/or when a difference between the frequency of the waveform of the operational data and the frequency of the waveform of the operational data during normal operation exceeds a second threshold. In operation 1202, the mobile device may be used to determine whether the part is under failure, or the mobile device may send the acquired operational data to a server, and the server may determine whether the part is under failure.

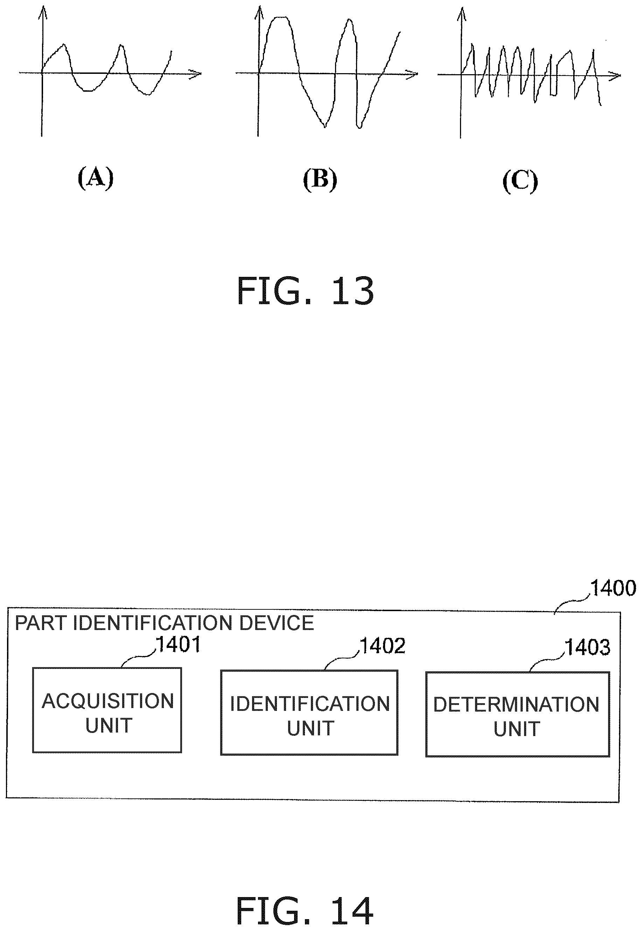

Fig. 13 is a schematic view illustrating the vibration signal acquired when a part operates normally and a vibration signal acquired when the part is under failure. Fig. 13(A) illustrates a waveform of the vibration signal acquired when the part operates normally. Fig. 13(B) illustrates an example of a waveform of the vibration signal acquired when the part is under failure, in which the amplitude of the waveform of the vibration signal is increased due to the failure of the part. Fig. 13(C) illustrates another example of a waveform of the vibration signal acquired when the part is under failure, in which the frequency of the waveform of the vibration signal is increased due to the failure of the part. In Figs. 13(A), 13(B), and 13(C), the horizontal axis represents time, and the vertical axis represents the amplitude of a signal.

A method of determining a failed part based on operational data will be described below with reference to one example. The example includes:

operation S1 of capturing a photograph of an air conditioner using a mobile phone;
operation S2 of encircling and selecting one region in the photograph on a screen of the mobile phone;
operation S3 of bringing a sensor close to the region selected as described above or into contact with the part in the region to acquire operational data of the part, wherein the operational data may be an audio signal (acquired by a microphone) or a vibration signal (acquired by a vibration sensor), and the sensor may be a microphone or a vibration sensor built in the mobile phone, or may be a microphone or a vibration sensor externally attached to the mobile phone; and
operation S4 of transmitting the acquired operational data to a server, analyzing the operation data, and determining whether the part is under failure.

Determining the failed part based on the image matching result in operation 105 may include comparing position information based on the part in the image with reference position information and determining the failed part based on a result of the comparison.

For example, the part is determined to be under failure, when a deviation value of the position of the part with respect to the reference position exceeds a third threshold, or when a difference between the area of another part shielded by the part at the current position and the area of the other part shielded by the part at the reference position exceeds a fourth threshold. As a result, it is possible to determine that some parts having a small volume or parts operational data of which is insufficient have failed, and for example, it is possible to determine a cause of a failure of the part such as screw loosening.

A method of determining a failed part based on the image matching result will be described below with reference to two examples. A first example includes:

operation S11 of downloading a reference image for a certain part (for example, a part requiring failure determination) from a database;
operation S12 of correcting the transparency of the reference image acquired in operation S 11, superimposing and displaying the resultant image on a captured image screen;
operation S13 of adjusting an imaging angle and an imaging range of the mobile phone based on the reference image superimposed and displayed on the captured image screen, and acquiring, through image capturing, an image of the part with the same imaging angle and imaging range as the reference image; and
operation S14 of comparing the image of the part obtained in operation S13 with a reference image of the part to compare the position information of the part with reference position information reflected in the reference image, determining whether the position of the part is deviated based on a result of the comparison, and determining that the part is under failure when the position is deviated.

A second example includes:

operation S21 of performing multi-angle image capturing, that is, left-to-right and/or top-to-bottom image capturing on a certain part (for example, a part requiring failure determination), using a mobile phone for example;
operation S22 of uploading the image captured in operation step S21 to a server and analyzing the image of each frame by the server;
operation S23 of extracting an image with the same imaging angle as the reference image of the part in the database, as the image of the part, based on a result of the analysis; and

operation S24 of comparing the image of the part obtained in operation S23 with a reference image of the part to compare the position information of the part with reference position information reflected in the reference image, determining whether the position of the part is deviated based on a result of the comparison, and determining that the part is under failure when the position is deviated.

In the present embodiment, from the parts recommended in operation 104 or operation 105, the engineer may select the finally confirmed part. When operation 104 or operation 105 is not performed, the part corresponding to the part information determined in the operation 103 is the finally confirmed part.

In the present embodiment, the part information of the finally identified part may be displayed in a part information field, and the part information field may be displayed based on a user operation or a voice command. For example, a user (for example, an engineer) calls a part information field by a click operation or a voice, the part information field may be displayed on a screen of a terminal of the engineer, and the part information field may display part information in a form of a table, a graph, or the like.

In the present embodiment, a part information detail page related to the part information is displayed based on an operation on the displayed part information (such as, for example, an operation of clicking the part information by the engineer), and the part information detail page includes an order page. The order page may receive an order operation and send, to a parts warehouse, an order requesting for supplying of the part based on the order operation.

As illustrated in Fig. 1, the part identification method further includes:

operation 106 of determining, based on the location of the appliance and the part information, a location of a warehouse from which the part is supplied and calculating a shortest time for scheduling for the part; and/or

operation 107 of outputting maintenance step information and/or time plan for the part.

Here, the maintenance step information may include information such as video or image for performing maintenance, installation, and/or disassembly on the part.

With operations 106 and 107, the engineer may be provided with an appliance maintenance plan based on the part information.

According to the first embodiment, shortening of a time required for checking the part information and improvement in appliance maintenance efficiency as well as improvement in accuracy of identification of the part type can be achieved, through detection of an image including a part based on a detection model, identification of a type of the part, and determination of part information.

(Second Embodiment)

This second embodiment provides a part identification device configured to execute the part identification method according to the first embodiment.

Fig. 14 is a schematic view illustrating the part identification device according to the second embodiment. As illustrated in Fig. 14, this part identification device 1400 includes:

an acquisition unit 1401 configured to acquire an image including a part;

an identification unit 1402 configured to detect the image based on a detection model and identifying a type of the part; and

a determination unit 1403 configured to determine part information based on the type of the part identified.

An operation of the determination unit 1403 of determining the part information based on the type of the part identified includes: determining a part in a predetermined region in the image based on the type of the part identified; and determining the part information based on the part determined. The predetermined region includes a planar region or a spatial region.

For a detailed description of each unit in the second embodiment, reference may be made to the description of the related operation in the first embodiment.

According to the second embodiment, by detecting the image including the part based on the detection model, identifying the type of the part, and determining the part information, it is possible to shorten the time required for checking the part information, to improve the appliance maintenance efficiency, and to improve the accuracy for identification of the type of the part.

The controller described with reference to the embodiments of the present invention may be embodied directly as hardware, as a software module executed by a processor, or as a combination of the two. These hardware modules can be realized by, for example, curing these software modules using a field programmable gate array (FPGA).

The software module may located in a RAM memory, a flash memory, a ROM memory, an EPROM memory, an EEPROM memory, a register, a hard disk, a removable disk, a CD-ROM, or any other form of storage medium known in the art. The storage medium may be coupled to a processor such that the processor can read information from, and write information to the storage medium, or the storage medium may be an integral part of the processor. The processor and the storage medium may be located in an ASIC. The software module may be stored in a memory of a mobile terminal, or may be stored in a memory card that can be inserted into the mobile terminal. For example, if an electronic appliance uses a large-capacity MEGA-SIM card or a large-capacity flash memory device, the software module may be stored in the MEGA-SIM card or the large-capacity flash memory device.

The controller as described in the present embodiment can be implemented as a general-purpose processor, a digital signal processor (DSP), an application specific integrated circuit (ASIC), a field programmable gate array (FPGA) or another programmable logic device, a discrete gate or transistor logic device, a discrete hardware component, or any suitable combination of these to perform the functions described in the present application. It may also be implemented as a combination of computing devices that is for example, a combination of a DSP and a microprocessor, a plurality of microprocessors, one or more microprocessors communicably coupled with a DSP, any other such configuration, or the like.

Embodiments of the present invention further relate to a storage medium for storing the above program, such as a hard disk, a magnetic disk, an optical disc, a DVD, a flash memory and the like for example.

It should be noted that, on the premise that the limitation of each step according to the present plan does not affect the implementation of the specific plan, the order of the steps is not limited, and one step may be executed earlier or later than the other, or the steps may be executed concurrently. As long as the present plan can be implemented, any of these should be considered to be within the protection scope of the present application.

While the present application has been described with reference to specific embodiments, it should be understood by those skilled in the art that the description is illustrative and does not limit the scope of the present application as claimed. A person skilled in the art may make various modifications and corrections to the present application based on the ideas and principles of the present application, and these modifications and corrections also fall within the scope of the present application.

**Claims**

1. A part identification method comprising:

   acquiring an image including a part;
   detecting the image based on a detection model and identifying a type of the part; and
   determining part information based on the type of the part identified and outputting the part information, wherein
   the determining the part information based on the type of the part identified includes
   determining a part in a predetermined region in the image based on the type of the part identified, and
determining the part information based on the part determined, and
the predetermined region includes a planar region or a spatial region.

2. The part identification method according to claim 1, wherein the part information includes
at least one of number, specification, wire cable number, supplier, material, price, stock quantity, and exploded view.

3. The part identification method according to claim 1, wherein

   the image is acquired through image capturing by using an image capturing device or through extraction from a video, and
   the image includes two or more overlapping parts.

4. The part identification method according to claim 1 further comprising:

   inputting a plurality of training images into a constructed neural network model;
   outputting a detection result through a fully connected network of the neural network;
   constructing a loss function based on the detection result and labeling information for the plurality of training images; and
   adjusting a parameter in the neural network model to minimize the loss function and make the neural network model converge, and saving the adjusted neural network model as the detection model.

5. The part identification method according to claim 4, wherein each of the training images includes at least one bounding box and a type label corresponding to a part in the bounding box, and the bounding box is a smallest bounding box enclosing a continuous part region.

6. The part identification method according to claim 1, wherein
the determining a part in the predetermined region of the image based on the type of the part identified includes:

   determining position information of the part identified;
   searching for a part within a first predetermined radius range based on a distance between parts; and
   displaying the part within the first predetermined radius range, and

a numerical value of the first predetermined radius is adjustable.

7. The part identification method according to claim 1, wherein

the determining a part in the predetermined region of the image based on the type of the part identified includes:

determining position information of the part identified;

searching for a part within a projection range of a second predetermined region including the part identified, based on a positional relationship between the part and another part in an image capturing direction of the image; and

displaying the part within the projection range, and

the second predetermined region is adjustable.

8. The part identification method according to claim 1, further comprising:

displaying an image of an external appearance of an appliance corresponding to a model of the appliance;

receiving a region setting operation on the image of the external appearance;

searching for a part within a projection range of a set region; and

displaying a part found.

9. The part identification method according to claim 1, further comprising:

acquiring operational data of a part in the image; and

identifying a failed part in the image based on the operational data.

10. The part identification method according to claim 9, wherein the operational data includes an audio signal generated during operation of the part and/or a vibration signal generated during operation of the part.

11. The part identification method according to claim 1, further comprising determining a failed part in the image based on a result of comparison between position information of the part in the image and reference position information.

12. The part identification method according to claim 1, further comprising:

determining, based on a location of the appliance and the part information, a location of a warehouse from which the part is supplied and calculating a shortest time for scheduling for the part; and/or

outputting maintenance step information and/or time plan for the part.

13. The part identification method according to claim 1, wherein

when the part information cannot be determined,

actual operational information of the appliance including the part and a usage/working condition of the part are acquired,

a loss condition of each part is predicted based on the usage/working condition of each part and a part under failure is estimated, and

part information of the estimated part is output, and

the part information of the estimated part includes a maintenance record of the appliance and/or information for maintaining the estimated part.

14. The part identification method according to claim 1, further comprising determining a recommended part based on the part information.

15. The part identification method according to claim 14, wherein the determining the recommended part based on the part information includes:

extracting a user feature and a part feature from user information and part information; and

acquiring a score value corresponding to a recommendation level for the user and the part based on the user feature and the part feature.

16. The part identification method according to claim 15, wherein the user information includes at least one of types of information that are an identification (ID) number, age, years of service, level, assigned region, belonging organization, and residing city of an engineer in charge of maintenance of the appliance including the part.

17. The part identification method according to claim 15, wherein based on a fully connected neural network model, the user feature and the part feature are extracted, and the score value is obtained.

18. The part identification method according to claim 1, further comprising determining a recommended part based on a failure code.

19. The part identification method according to claim 1, wherein

the part information is displayed in a part information field, and

the part information field is displayed based on a user operation or a voice command.

20. The part identification method according to claim 1, further comprising displaying a part information detail page related to the part information based on an operation on displayed part information, wherein the part information detail page includes an order page, and the order page receives an order operation and sends an order, requesting for supplying of the part, to a parts warehouse based on the order operation.

21. A part identification device comprising:

an acquisition unit configured to acquire an image including a part;

an identification unit configured to detect the image based on a detection model and identify a type of the part; and

a determination unit configured to determine part information based on the type of the part identified, wherein

the determining, by the determination unit, the part information based on the type of the part identified includes

determining a part in a predetermined region in the image based on the type of the part identified, and

determining the part information based on the part determined, and

the predetermined region includes a planar region or a spatial region.

```
                              ┌─────────────┐
                              │   START     │
                              └─────────────┘
                                     │
        ┌────────────────────────────┼────────────────────────────────┐
        │ 101                        │ 101a                            │ 105
        ▼                            ▼                                 ▼
┌──────────────────┐    ┌──────────────────────┐    ┌──────────────────────────┐
│                  │    │   DISPLAY IMAGE OF    │    │      DETERMINE           │
│  ACQUIRE IMAGE   │    │     EXTERNAL          │    │   RECOMMENDED PART       │
│   INCLUDING      │    │    APPEARANCE OF      │    │   BASED ON AT LEAST      │
│     PART         │    │     APPLIANCE         │    │  ONE OF FAILURE CODE,    │
│                  │    │  CORRESPONDING TO     │    │  OPERATIONAL DATA, AND   │
│                  │    │    MODEL OF THE       │    │  IMAGE MATCHING RESULT   │
│                  │    │     APPLIANCE         │    │                          │
└──────────────────┘    └──────────────────────┘    └──────────────────────────┘
        │ 102                        │ 102a                            │
        ▼                            ▼                                 │
┌──────────────────┐    ┌──────────────────────┐                      │
│  DETECT THE IMAGE│    │   RECEIVE REGION      │                      │
│ BASED ON DETECTION│   │  SETTING OPERATION    │                      │
│ MODEL AND IDENTIFY│   │ FOR THE IMAGE OF THE  │                      │
│   TYPE OF PART   │    │  EXTERNAL APPEARANCE  │                      │
└──────────────────┘    └──────────────────────┘                      │
        │ 103                        │ 103a                            │
        ▼                            ▼                                 │
┌──────────────────┐    ┌──────────────────────┐                      │
│  BASED ON TYPE OF│    │   SEARCH FOR PART     │                      │
│  PART IDENTIFIED,│    │  WITHIN PROJECTION    │                      │
│  DETERMINE PART  │    │ RANGE OF SET REGION   │                      │
│   INFORMATION    │    │                       │                      │
└──────────────────┘    └──────────────────────┘                      │
        │                           │ 104a                            │
        │                           ▼                                 │
        │               ┌──────────────────────┐                      │
        │               │   DISPLAY PART        │                      │
        │               │     FOUND             │                      │
        │               └──────────────────────┘                      │
        │                           │                                 │
        ▼                           ▼                                 │
┌──────────────────┐                                                  │
│  BASED ON PART   │  104                                             │
│  INFORMATION,    │                                                  │
│  DETERMINE       │                                                  │
│ RECOMMENDED PART │                                                  │
└──────────────────┘                                                  │
        │                                                             │
        ▼                                                             │
┌──────────────────┐                                                  │
│ BASED ON LOCATION│                                                  │
│  OF APPLIANCE AND│                                                  │
│ PART INFORMATION,│                                                  │
│ IDENTIFY LOCATION│  106                                             │
│ OF WAREHOUSE FROM│                                                  │
│ WHICH PART IS    │                                                  │
│ SUPPLIED AND     │                                                  │
│  CALCULATE       │                                                  │
│ SHORTEST TIME FOR│                                                  │
│ SCHEDULING FOR PART                                                 │
└──────────────────┘                                                  │
        │                                                             │
        ▼                                                             │
┌──────────────────┐                                                  │
│ OUTPUT MAINTENANCE│ 107                                             │
│  STEP INFORMATION │                                                 │
│  AND/OR TIME PLAN │                                                 │
│   FOR THE PART    │                                                 │
└──────────────────┘
        │
        ▼
┌──────────────┐
│     END      │
└──────────────┘
```

FIG. 1

201

INPUT PLURALITY OF TRAINING IMAGES TO
CONSTRUCTED NEURAL NETWORK MODEL

202

OUTPUT DETECTION RESULT THROUGH FULLY
CONNECTED NETWORK OF NEURAL NETWORK

203

CONSTRUCT LOSS FUNCTION BASED ON THE
DETECTION RESULT AND LABELING INFORMATION
FOR THE PLURALITY OF TRAINING IMAGES

204

ADJUST PARAMETER IN THE NEURAL NETWORK
MODEL TO MINIMIZE THE LOSS FUNCTION AND
CONVERGE THE NEURAL NETWORK MODEL

# FIG. 2

301

DETERMNINE POSITION
INFORMATION OF PART IDENTIFIED

302

SEARCH FOR PART WITHIN FIRST
PREDETERMINED RADIUS RANGE
BASED ON DISTANCE BETWEEN PARTS

303

DISPLAY PART WITHIN THE FIRST
PREDETERMINED RADIUS RANGE

FIG. 3

POSSIBLE PART B
(REQUIRED PART)

POSSIBLE
PART A

TARGET
PART O

POSSIBLE
PART C

POSSIBLE
PART D

TARGET
PART O

POSSIBLE
PART A

POSSIBLE
PART B

POSSIBLE
PART C

POSSIBLE
PART D

FIG. 4

FIG. 5

601

DETERMINE POSITION INFORMATION
OF THE PART IDENTIFIED

602

SEARCH FOR PART WITHIN PROJECTION RANGE OF SECOND
PREDETERMINED REGION INCLUDING IDENTIFIED PART BASED
ON POSITIONAL RELATIONSHIP BETWEEN THE PART AND
ANOTHER PART IN IMAGE CAPTURING DIRECTION FOR IMAGE

603

DISPLAY PART WITHIN THE
PROJECTION RANGE

# FIG. 6

AIR
CONDITIONER

TARGET
PART O

POSSIBLE
PART B

PROJECTION
REGION

POSSIBLE
PART A

TARGET
PART O

POSSIBLE
PART B

POSSIBLE
PART A

POSSIBLE
PART C

POSSIBLE
PART C

# FIG. 7

801

ACQUIRE ACTUAL OPERATIONAL
INFORMATION OF APPLIANCE AND USAGE/
WORKING CONDITION OF PART

802

PREDICT LOSS CONDITION OF EACH PART
BASED ON USAGE/WORKING CONDITION OF
EACH PART, AND ESTIMATE PART UNDER FAILURE

803

OUTPUT PART INFORMATION
OF ESTIMATED PART

FIG. 8

901

EXTRACT USER FEATURE AND PART FEATURE
FROM USER INFORMATION AND
PART INFORMATION

902

ACQUIRE SCORE VALUE FOR THE USER AND
THE PART BASED ON THE USER FEATURE AND
THE PART FEATURE

FIG. 9

1001

EXTRACT PART INFORMATION OF
EACH PART FROM PART DATABASE

1002

MAP AND PROCESS, BY FULLY CONNECTED NEURAL
NETWORK, EACH OF NUMBER AND RELEASE TIME
OF PART AS WELL AS REPLACEABLE PART NUMBER

1003

PERFORM WORD VECTOR PROCESSING
ON PART NAME USING NEURAL NETWORK

1004

PROCESS AFFILIATED MODEL BY TEXT
CONVOLUTIONAL NEURAL NETWORK

1005

PERFORM MERGE PROCESSING ON FIRST FEATURE
VECTOR, SECOND FEATURE VECTOR, AND THIRD
FEATURE VECTOR TO ACQUIRE PART FEATURE VECTOR
CORRESPONDING TO THE PART FEATURE

FIG. 10

1101

EXTRACT USER INFORMATION
OF USER FROM DATABASE

1102

MAP AND PROCESS, BY FULLY CONNECTED NEURAL
NETWORK, EACH OF ID NUMBER, AGE, YEARS OF SERVICE,
LEVEL, ASSIGNED REGION, BELONGING ORGANIZATION,
AND RESIDING CITY OF THE USER

1103

PERFORM MERGE PROCESSING ON ALL FOURTH
FEATURE VECTORS ACQUIRED IN OPERATION 1002
TO ACQUIRE USER FEATURE VECTOR
CORRESPONDING TO USER FEATURE

# FIG. 11

1201

ACQUIRE OPERATIONAL DATA
OF PART IN IMAGE

1202

IDENTIFY FAILED PART IN THE IMAGE
BASED ON OPERATIONAL DATA

# FIG. 12

EP 4 446 907 A1

(A)　　　　　　(B)　　　　　　(C)

# FIG. 13

PART IDENTIFICATION DEVICE 　　　　　　1400

| ACQUISITION UNIT 1401 | IDENTIFICATION UNIT 1402 | DETERMINATION UNIT 1403 |

# FIG. 14

## INTERNATIONAL SEARCH REPORT

International application No.

**PCT/JP2022/044612**

### A. CLASSIFICATION OF SUBJECT MATTER

*G06F 16/9032*(2019.01)i; *G06Q 10/20*(2023.01)i
FI: G06F16/9032; G06Q10/20

According to International Patent Classification (IPC) or to both national classification and IPC

### B. FIELDS SEARCHED

Minimum documentation searched (classification system followed by classification symbols)

G06F16/9032; G06Q10/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-160171 A (RICOH CO., LTD.) 19 September 2019 (2019-09-19) | 1-3, 19, 21 |
| | paragraphs [0005], [0053], [0056], [0057], [0082], [0083], [0088], [0092] | |
| Y | | 2, 4-5, 8-12, 14, 18, 20 |
| A | | 6-7, 12, 15-17 |
| Y | JP 2010-267113 A (DAINIPPON PRINTING CO., LTD.) 25 November 2010 (2010-11-25) | 2, 20 |
| | paragraphs [0002], [0021], [0022] | |
| A | | 1, 3-19, 21 |
| Y | CN 111738367 A (CHENGDU CHINA METRO TRACK EQUIPMENT CO., LTD.) 02 October 2020 (2020-10-02) | 4-5 |
| | abstract, paragraphs [0007]-[0010] | |
| A | | 1-3, 6-21 |
| Y | JP 2021-526250 A (STRONG FORCE IOT PORTFOLIO 2016, LLC) 30 September 2021 (2021-09-30) | 9-11 |
| | claims 107-108, paragraph [0395] | |
| A | | 1-8, 12-21 |

[✓] Further documents are listed in the continuation of Box C.　　[✓] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 December 2022** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 446 907 A1

**INTERNATIONAL SEARCH REPORT**

International application No.

**PCT/JP2022/044612**

### C.    DOCUMENTS CONSIDERED TO BE RELEVANT

| Category* | Citation of document, with indication, where appropriate, of the relevant passages | Relevant to claim No. |
|---|---|---|
| Y | JP 2002-255465 A (HITACHI, LTD.) 11 September 2002 (2002-09-11) abstract | 12 |
| A | | 1-11, 13-21 |
| Y | JP 2008-234005 A (FUJITSU LTD.) 02 October 2008 (2008-10-02) abstract, paragraph [0058] | 8 |
| A | | 1-7, 9-21 |
| Y | JP 2004-220460 A (HITACHI, LTD.) 05 August 2004 (2004-08-05) paragraphs [0024], [0025] | 14, 18 |
| A | | 1-13, 15-17, 19-21 |
| A | KR 10-2021-0071523 A (LG ELECTRONICS INC.) 16 June 2021 (2021-06-16) entire text, all drawings | 1-21 |
| A | JP 2021-89549 A (TOKYO GAS CO., LTD.) 10 June 2021 (2021-06-10) entire text, all drawings | 1-21 |

Form PCT/ISA/210 (second sheet) (January 2015)

**INTERNATIONAL SEARCH REPORT**

| International application No. |
| --- |
| **PCT/JP2022/044612** |

---

**Box No. III     Observations where unity of invention is lacking (Continuation of item 3 of first sheet)**

This International Searching Authority found multiple inventions in this international application, as follows:

(Invention 1) Claims 1-13 and 19-21
    The invention of claims 1-2 does not have a special technical feature in light of document 1. In addition, the added technical features in claims 3-13 and 19-21 that depend from claim 1 have technical relevance to the technical feature of claim 1 of specifying component information on the basis of an image including a component. Accordingly claims 1-13 and 19-21 are classified as invention 1.
(Invention 2) Claims 14-18
    Although claims 14-18 depend from claim 1 classified as invention 1, the added technical features relative to claim 1 have low technical relevance to the technical feature of claim 1 of specifying component information on the basis of an image including a component. Thus, it is not considered that claims 14-18 have a link of invention to claim 1.
    Furthermore, claims 14-18 are not substantially identical to or similarly closely related to any of the claims classified as invention 1.
    Accordingly claims 14-18 cannot be identified as invention 1.
    Meanwhile, claims 14-18 have the special technical feature of specifying a recommended component, and thus are classified as invention 2.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**    [ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (January 2015)

**INTERNATIONAL SEARCH REPORT**
Information on patent family members

International application No.

**PCT/JP2022/044612**

| Patent document cited in search report | | | Publication date (day/month/year) | Patent family member(s) | Publication date (day/month/year) |
|---|---|---|---|---|---|
| JP | 2019-160171 | A | 19 September 2019 | (Family: none) | |
| JP | 2010-267113 | A | 25 November 2010 | (Family: none) | |
| CN | 111738367 | A | 02 October 2020 | (Family: none) | |
| JP | 2021-526250 | A | 30 September 2021 | WO 2019/216975 A1 claims 107-108, paragraph [0395] US 2020/0103894 A1 EP 3791236 A1 CN 112703457 A CA 3099659 A1 | |
| JP | 2002-255465 | A | 11 September 2002 | (Family: none) | |
| JP | 2008-234005 | A | 02 October 2008 | (Family: none) | |
| JP | 2004-220460 | A | 05 August 2004 | (Family: none) | |
| KR | 10-2021-0071523 | A | 16 June 2021 | (Family: none) | |
| JP | 2021-89549 | A | 10 June 2021 | (Family: none) | |

Form PCT/ISA/210 (patent family annex) (January 2015)